(19) **Europäisches Patentamt / European Patent Office / Office européen des brevets**

(11) **EP 4 376 145 A2**

(12) **EUROPEAN PATENT APPLICATION**

(43) Date of publication:
**29.05.2024 Bulletin 2024/22**

(21) Application number: **23192396.2**

(22) Date of filing: **21.08.2023**

(51) International Patent Classification (IPC):
**H01M 10/052** (2010.01)    **H01M 10/0525** (2010.01)
**H01M 10/0562** (2010.01)

(52) Cooperative Patent Classification (CPC):
**H01M 10/0562; H01M 10/052; H01M 10/0525;**
H01M 2300/0068; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022  KR 20220131442**

(71) Applicants:
• **HYUNDAI MOTOR COMPANY**
  **Seoul 06797 (KR)**
• **Kia Corporation**
  **Seocho-gu**
  **Seoul 06797 (KR)**
• **Samsung SDI Co., Ltd.**
  **Yongin-si, Gyeonggi-do 17084 (KR)**

(72) Inventors:
• **KIM, Sa Heum**
  **18280 Hwaseong-si, Gyeonggi-do (KR)**
• **JANG, Yong Jun**
  **18280 Hwaseong-si, Gyeonggi-do (KR)**
• **KIM, Yong Gu**
  **18280 Hwaseong-si, Gyeonggi-do (KR)**

• **CHO, Sung Man**
  **18280 Hwaseong-si, Gyeonggi-do (KR)**
• **CHOI, Sun Ho**
  **18280 Hwaseong-si, Gyeonggi-do (KR)**
• **CHOI, Seong Hyeon**
  **18280 Hwaseong-si, Gyeonggi-do (KR)**
• **PARK, Kyu Sung**
  **17084 Yongin-si, Gyeonggi-do (KR)**
• **RYU, Young Gyoon**
  **17084 Yongin-si, Gyeonggi-do (KR)**
• **HONG, Suk Gi**
  **17084 Yongin-si, Gyeonggi-do (KR)**
• **YUN, Pil Sang**
  **17084 Yongin-si, Gyeonggi-do (KR)**
• **HA, Myeong Ju**
  **17084 Yongin-si, Gyeonggi-do (KR)**
• **KIM, Hyun Beom**
  **17084 Yongin-si, Gyeonggi-do (KR)**
• **YANG, Hwi Chul**
  **17084 Yongin-si, Gyeonggi-do (KR)**

(74) Representative: **Viering, Jentschura & Partner
mbB
Patent- und Rechtsanwälte
Am Brauhaus 8
01099 Dresden (DE)**

(54) **SOLID ELECTROLYTE HAVING EXCELLENT MOISTURE STABILITY AND METHOD FOR PREPARING SAME**

(57)    An embodiment solid electrolyte includes a first compound and a second compound. The first compound is represented by a first chemical formula $Li_{7-a}PS_{6-a}(Xi_{1-b}X_{2b})_a$, wherein X1 and X2 are the same or different and each represents F, Cl, Br, or I, and wherein $o < a \leq 2$ and $o < b < 1$, and the second compound is represented by a second chemical formula $Li_{7-c}P_{1-2d}M_dS_{6-c-3d}(X1_{1-e}X_{2e})_c$, wherein X1 and X2 are the same or different and each represents F, Cl, Br, or I, wherein M represents Ge, Si, Sn, or any combination thereof, and wherein $o < c \leq 2$, $o < d < 0.5$, and $o < e < 1$.

FIG. 1

**Description**

**TECHNICAL FIELD**

The present disclosure relates to a solid electrolyte for an all-solid-state battery having excellent moisture stability and a method for preparing the same.

**BACKGROUND**

Sulfide-based solid electrolytes are in the spotlight as solid electrolytes for all-solid-state batteries since they have high lithium ion conductivity and are ductile. However, the sulfide-based solid electrolytes have poor moisture stability. Water molecules in the air decompose the bonds of bridging sulfur in the sulfide-based solid electrolytes to generate hydrogen sulfide ($H_2S$) and lower crystallinity to reduce lithium ion conductivity.

$Li_6PS_5Cl$ having an argyrodite-type crystal structure among the sulfide-based solid electrolytes has an advantage of high lithium ion conductivity. In order to increase the moisture stability of $Li_6PS_5Cl$, an attempt was made to increase the ratio of a halogen element. Increasing the ratio of the halogen element may temporarily improve moisture stability and lithium ion conductivity, but it is not a fundamental solution since it cannot prevent water molecules in the air from decomposing the bonds of bridging sulfur.

**SUMMARY**

An embodiment of the present disclosure provides a solid electrolyte having excellent moisture stability and lithium ion conductivity and a method for preparing the same.

The embodiments of the present disclosure are not limited to the embodiment mentioned above. The embodiments of the present disclosure will become more apparent from the following description and will be realized by means and combinations thereof described in the claims.

A solid electrolyte according to one embodiment of the present disclosure may include a first compound represented by Chemical Formula 1 below and a second compound represented by Chemical Formula 2 below.

<u>Chemical Formula 1</u>         $Li_{7-a}PS_{6-a}(X1_{1-b}X2_b)_a$

In Chemical Formula 1, X1 and X2 may be the same or different and may each represent F, Cl, Br, or I, and $0 < a \leq 2$ and $0 < b < 1$ may be satisfied.

<u>Chemical Formula 2</u>         $Li_{7-c}P_{1-2d}M_dS_{6-c-3d}(X1_{1-e}X2_e)_c$

In Chemical Formula 2, X1 and X2 may be the same or different and may each represent F, Cl, Br, or I, M may represent at least one of Ge, Si, Sn, or any combination thereof, and $0 < c \leq 2$, $0 < d < 0.5$, and $0 < e < 1$ may be satisfied.

The solid electrolyte may further include a third compound represented by Chemical Formula 3 below.

<u>Chemical Formula 3</u>         $Li_fM_gS_h$

In Chemical Formula 3, M may represent at least one of Ge, Si, Sn, or any combination thereof, and $0 < f \leq 10$, $0 < g \leq 5$, and $0 < h \leq 10$ may be satisfied.

In Chemical Formula 2, $0 < d \leq 0.1$ maybe satisfied.

An X-ray diffraction (XRD) pattern of the solid electrolyte may include a peak due to a cubic argyrodite-type crystal structure and a peak due to an orthorhombic crystal structure.

The solid electrolyte may be one in which, as d in Chemical Formula 2 above increases, $2\theta$ value of a peak of a (220) plane of the cubic argyrodite-type crystal structure in the X-ray diffraction (XRD) pattern may shift to lower angles by greater than 0° and 0.1° or less.

The solid electrolyte may have a ratio ($I_{(38.5)}/I_{(30.0)}$) of peak intensity at $2\theta = 38.5 \pm 0.5°$ to peak intensity at $2\theta = 30 \pm 0.5°$ in the X-ray diffraction (XRD) pattern of about 0.01 or less.

The solid electrolyte may have a ratio ($I_{(25)}/I_{(17)}$) of peak intensity at $2\theta = 25 \pm 0.5°$ to peak intensity at $2\theta = 17 \pm 0.5°$ in the X-ray diffraction (XRD) pattern of about 1 to 10.

When the solid electrolyte is analyzed by X-ray photoelectron spectroscopy (XPS), a result of XPS may include a first region and a second region with different contents of an element M.

The content of the element M in the first region may be about 0.9 at% to 1.2 at%.

The content of the element M in the second region may be about 0.2 at% to 0.5 at%.

The solid electrolyte may have a lithium ion conductivity retention rate of about 80% or more after 3 days under dry condition in an air atmosphere having a dew point of -70°C or less.

A method for preparing a solid electrolyte according to one embodiment of the present disclosure may include steps of preparing a starting material including a compound containing lithium, a compound containing phosphorus (P), a compound containing an element M, and two or more compounds containing different halogen elements, preparing an intermediate material by pulverizing the starting material, and heat treating the intermediate material.

The preparation method may be to pulverize the starting material at about 800 rpm to 1,000 rpm.

The preparation method may be to pulverize the starting material by applying a force of about 25 G to 50 G to the starting material.

The preparation method may be to heat treat the intermediate material at about 400°C to 600°C for about 25 minutes to 36 hours.

According to embodiments of the present disclosure, a solid electrolyte having excellent moisture stability and lithium ion conductivity can be obtained.

The embodiments of the present disclosure are not limited to the above-mentioned embodiments. It should be understood that the embodiments of the present disclosure include all embodiments that can be inferred from the following description.

## BRIEF DESCRIPTION OF THE DRAWINGS

FIG. 1 shows an all-solid-state battery according to embodiments of the present disclosure.

FIG. 2A shows X-ray diffraction analysis results of the solid electrolytes of Examples 1 to 4 and Comparative Example 2.

FIG. 2B shows an enlarged view of partial regions of FIG. 2A.

FIG. 3A shows X-ray diffraction analysis results of the solid electrolytes of Comparative Examples 3a to 3c.

FIG. 3B shows an enlarged view of partial regions of FIG. 3A.

FIG. 4 shows X-ray diffraction analysis results of the solid electrolytes of Example 4, Comparative Example 4a, and Comparative Example 4b.

FIG. 5 shows the contents of the tin element of the solid electrolytes of Example 4 and Comparative Example 3c by X-ray photoelectron spectroscopy (XPS).

FIG. 6A shows a scanning electron microscope-energy dispersive X-ray spectrometer (SEM-EDS) analysis result for the tin element of the solid electrolyte according to Example 4.

FIG. 6B shows a SEM-EDS analysis result of the tin element of the solid electrolyte according to Comparative Example 3c.

## DETAILED DESCRIPTION OF ILLUSTRATIVE EMBODIMENTS

The above objects, other objects, features and advantages of embodiments of the present disclosure will be easily understood through the following preferred embodiments related to the accompanying drawings. However, the present disclosure is not limited to the embodiments described herein and may be embodied in other forms. Rather, the embodiments introduced herein are provided so that the disclosed content may become thorough and complete, and the present disclosure may be sufficiently conveyed to those skilled in the art.

The similar reference numerals have been used for similar elements while explaining each drawing. In the accompanying drawings, the dimensions of the structures are illustrated after being more enlarged than the actual dimensions for clarity of the present disclosure. Terms such as first, second, etc. may be used to describe various components, but the components should not be limited by the terms. The terms are used only for the purpose of distinguishing one component from another component. For example, a first component may be referred to as a second component, and similarly, the second component may also be referred to as the first component, without departing from the scope of rights of the present disclosure. The singular expression includes the plural expression unless the context clearly dictates otherwise.

In the present specification, terms such as "comprise", "have", etc. are intended to designate that a feature, number, step, operation, component, part, or a combination thereof described in the specification exists, but it should be understood that the terms do not preclude the possibility of the existence or addition of one or more other features, numbers, steps, operations, components, parts, or combinations thereof. Further, when a part of a layer, film, region, plate, etc. is said to be "on" other part, this includes not only the case where it is "directly on" the other part, but also the case where there is another part in the middle therebetween. Conversely, when a part of a layer, film, region, plate, etc. is said to be "under" another part, this includes not only the case where it is "directly under" the other part, but also the case where there is another part in the middle therebetween.

Unless otherwise specified, since all numbers, values, and/or expressions expressing quantities of components, reaction conditions, polymer compositions, and formulations used in the present specification are approximate values reflecting various uncertainties of the measurement that arise in obtaining these values among others in which these numbers are essentially different, they should be understood as being modified by the term "about" in all cases. Further, when a numerical range is disclosed in this description, such a range is continuous, and includes all values from a minimum value of such a range to a maximum value including the minimum and maximum values, unless otherwise indicated. Furthermore, when such a range refers to an integer, all integers including from a minimum value to a maximum value including the minimum and maximum values are included, unless otherwise indicated.

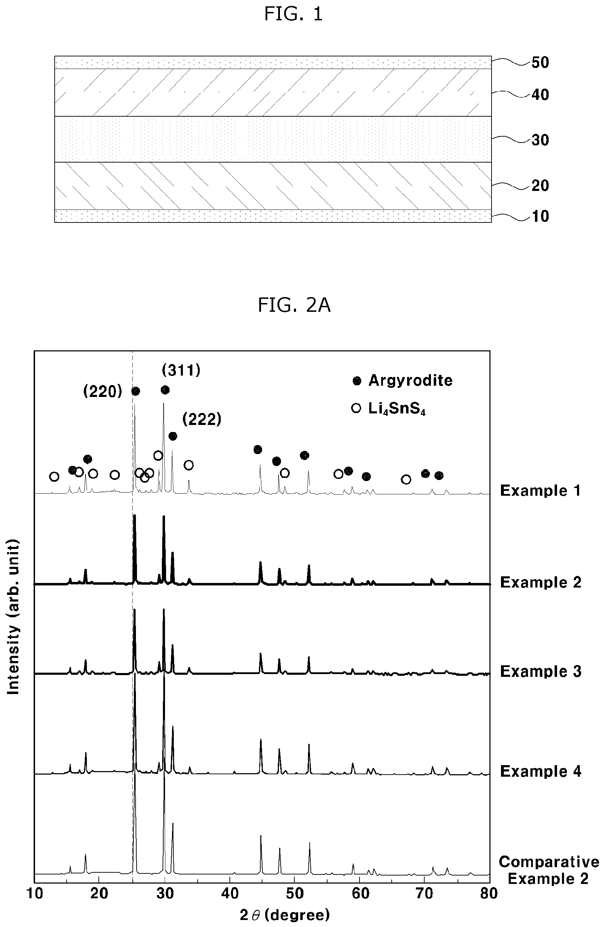

FIG. 1 shows an all-solid-state battery according to embodiments of the present disclosure. The all-solid-state battery may include an anode current collector 10, an anode layer 20, a solid electrolyte layer 30, a cathode layer 40, and a cathode current collector 50.

At least one of the anode layer 20, the solid electrolyte layer 30, and the cathode layer 40 may include a solid electrolyte.

The solid electrolyte may include a first compound represented by Chemical Formula 1 below, a second compound represented by Chemical Formula 2 below, and a third compound represented by Chemical Formula 3 below.

$$\text{Chemical Formula 1} \qquad Li_{7-a}PS_{6-a}(X1_{1-b}X2_b)_a$$

In Chemical Formula 1, X1 and X2 may be the same or different and may each represent F, Cl, Br, or I, and $0<a\leq2$ and $0<b<1$ may be satisfied.

$$\text{Chemical Formula 2} \qquad Li_{7-c}P_{1-2d}M_dS_{6-c-3d}(X1_{1-e}X2_e)_c$$

In Chemical Formula 2, X1 and X2 may be the same or different and may each represent F, Cl, Br, or I, M may represent at least one of Ge, Si, Sn, or any combination thereof, and $0<c\leq2$, $0<d<0.5$, and $0<e<1$ may be satisfied.

$$\text{Chemical Formula 3} \qquad Li_fM_gS_h$$

In Chemical Formula 3, M may be the same as M in Chemical Formula 2, and $0<f\leq10$, $0<g\leq5$, and $o<h\leq10$ may be satisfied.

The first compound represented by Chemical Formula 1 above may be a solid electrolyte having an argyrodite-type crystal structure. The solid electrolyte having an argyrodite-type crystal structure may refer to a solid electrolyte exhibiting lithium ion conductivity while having a crystal structure such as $Ag_8GeS_6$ that is an ore, and a representative example is $Li_7PS_6$. The first compound represented by Chemical Formula 1 above may be one in which a part of a sulfur (S) element of $Li_7PS_6$ is substituted with the halogen element. Since the halogen element has superior moisture stability and oxidation stability compared to the sulfur element, structural stability of the first compound may be improved when substituting a part of the sulfur element with the halogen element. In addition, when the halogen element is substituted, since a vacancy is formed in a lithium site part inside the argyrodite-type crystal structure, lithium ion conductivity may be increased.

The first compound may include $Li_6PS_5Cl_{0.5}Br_{0.5}$, $Li_{5.4}PS_{4.4}Cl_{0.8}Br_{0.8}$, and the like.

The second compound represented by Chemical Formula 2 above is a solid electrolyte having an argyrodite-type crystal structure in which a part of a phosphorus (P) element of the first compound is substituted with an element M. The element M may include an element having a larger ionic radius than the phosphorus element. For example, the element M may include at least one of Ge, Si, Sn, or any combination thereof. As ions of the element M having a larger ionic radius than phosphorus (P) ions are disposed on a portion of the phosphorus (P) site, the crystal lattice volume increases. When the crystal lattice volume increases, since the movement of lithium ions within the crystal lattice becomes easier, the lithium ion conductivity and the retention rate of the lithium ion conductivity may be improved.

The second compound may include $Li_{5.4}P_{0.8}Ge_{0.1}S_{4.1}Cl_{0.8}Br_{0.8}$, $Li_{5.4}P_{0.85}Ge_{0.075}S_{4.175}Cl_{0.8}Br_{0.8}$, $Li_{5.4}P_{0.88}Ge_{0.06}S_{4.22}Cl_{0.8}Br_{0.8}$, $Li_{5.4}P_{0.9}Ge_{0.05}S_{4.25}Cl_{0.8}Br_{0.8}$, $Li_{5.4}P_{0.8}Si_{0.1}S_{4.1}Cl_{0.8}Br_{0.8}$,

$Li_{5.4}P_{0.85}Si_{0.075}S_{4.175}Cl_{0.8}Br_{0.8}$, $Li_{5.4}P_{0.88}Si_{0.06}S_{4.22}Cl_{0.8}Br_{0.8}$, $Li_{5.4}P_{0.9}Si_{0.05}S_{4.25}Cl_{0.8}Br_{0.8}$, $Li_{5.4}P_{0.8}Sn_{0.1}S_{4.1}Cl_{0.8}Br_{0.8}$, $Li_{5.4}P_{0.85}Sn_{0.075}S_{4.175}Cl_{0.8}Br_{0.8}$, $Li_{5.4}P_{0.88}Sn_{0.06}S_{4.22}Cl_{0.8}Br_{0.8}$, $Li_{54}P_{0.9}Sn_{0.05}S_{4.25}Cl_{0.8}Br_{0.8}$, and the like.

The third compound represented by Chemical Formula 3 above may be a solid electrolyte having an orthorhombic crystal structure. Since the third compound is a solid electrolyte having excellent lithium ion conductivity and moisture stability, the lithium ion conductivity and moisture stability of the solid electrolyte according to embodiments of the present disclosure may be simultaneously improved by complexing it with the first compound and the second compound. Here, "complexing" may mean obtaining a solid electrolyte including the first compound to third compound through pulverization and heat treatment steps under specific conditions not by simply mixing the first compound to third compound, but by using a specific starting material.

The third compound may include $Li_4GeS_4$, $Li_4SiS_4$, $Li_4SnS_4$, and the like.

The solid electrolyte may have a lithium ion conductivity of about 1.0 mS/cm or more, about 1.5 mS/cm or more, about 2.0 mS/cm or more, about 2.5 mS/cm or more, about 3.0 mS/cm or more, about 3.5 mS/cm or more, about 4.0 mS/cm or more, or about 5.0 mS/cm or more at about 25°C. The lithium ion conductivity may be measured through a DC polarization method, impedance spectroscopy, or the like.

The solid electrolyte may have a lithium ion conductivity retention rate of about 80% or more when left in a dry room having a dew point of -10°C or less, -30°C or less, -50°C or less, or -70°C or less for 3 days. The lithium ion conductivity retention rate can be calculated by Mathematical Equation 1 below.

Mathematical Equation 1

$$\text{Lithium ion conductivity retention rate [\%]} = [\text{Lithium ion conductivity of solid electrolyte after 3 days / Initial lithium ion conductivity of solid electrolyte}] \times 100$$

In Mathematical Equation 1, the initial lithium ion conductivity of the solid electrolyte may mean the lithium ion conductivity before storage in dry conditions.

Hereinafter, each configuration of the all-solid-state battery will be described specifically.

The anode current collector 10 may include a plate-shaped substrate having electrical conductivity. Specifically, the anode current collector 10 may have a sheet, thin film, or foil shape.

The anode current collector 10 may include a material that does not react with lithium. Specifically, the anode current collector 10 may include at least one selected from the group consisting of Ni, Cu, stainless steel (SUS), and combinations thereof.

According to the first embodiment of the present disclosure, the anode layer 20 may include a composite anode containing an anode active material and a solid electrolyte.

The anode active material is not particularly limited and may include, for example, at least one selected from the group consisting of a carbon active material, a metal active material, and a combination thereof.

The carbon active material may include graphite, such as mesocarbon microbeads (MCMB), highly oriented pyrolytic graphite (HOPG), and the like, and amorphous carbon such as hard carbon, soft carbon, and the like.

The metal active material may include at least one selected from the group consisting of In, Al, Si, Sn, and combinations thereof.

The anode layer 20 may further contain a solid electrolyte having a different composition together with the solid electrolyte described above. For example, the anode layer 20 may further include an oxide-based solid electrolyte or a sulfide-based solid electrolyte.

The sulfide-based solid electrolytes may include $Li_2S-P_2S_5$, $Li_2S-P_2S_5-LiI$, $Li_2S-P_2S_5-LiCl$, $Li_2S-P_2S_5-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (provided that m and n are positive numbers, and Z is one of Ge, Zn, and Ga), $Li_2S-GeS_2$, $Li_2S-SiS_2-Li_3PO_4$, $Li_2S-SiS_2-Li_xMO_y$ (provided that x and y are positive numbers, and M is one of P, Si, Ge, B, Al, Ga, and In), $Li_{10}GeP_2S_{12}$, and the like.

The oxide-based solid electrolyte may include lithium phosphorous oxynitride (LiPON), a garnet-based solid electrolyte, a perovskite-based solid electrolyte, a Na superionic conductor (NASICON)-based solid electrolyte, and the like.

The garnet-based solid electrolyte may include $Li_{7-y}La_{3-x}A_xZr_{2-y}M_yO_{12}$ (where x is $0 \leq x \leq 3$, y is $0 \leq y \leq 2$, A is at least one selected from the group consisting of Y, Nd, Sm, and Gd, and M is Nb or Ta).

The perovskite-based solid electrolyte may include $Li_{0.5-3x}La_{0.5+x}TiO_3$ (where x is $0 \leq x \leq 0.15$).

The Na superionic conductor (NASICON)-based solid electrolyte may include $Li_{1+x}Al_xTi_{2-x}(PO_4)_3$ (where x is $0 \leq x \leq 3$), $Li_{1+x}Al_xGe_{2-x}(PO_4)_3$ (where x is $0 \leq x \leq 3$), and the like.

According to a second embodiment of the present disclosure, the anode layer 20 may include lithium metal or a lithium metal alloy.

The lithium metal alloy may include lithium and a metal or metalloid capable of alloying with lithium. The metal or metalloid capable of alloying with lithium may include Si, Sn, Al, Ge, Pb, Bi, Sb, and the like.

According to a third embodiment of the present disclosure, the anode layer 20 may not include an anode active material and a configuration playing substantially the same role as the anode active material. During charging of the all-solid-state battery, lithium ions that have migrated from the cathode layer 40 may be precipitated and stored in the form of lithium metal between the anode layer 20 and the anode current collector 10.

The anode layer 20 may include an amorphous carbon and a metal capable of forming an alloy with lithium.

The amorphous carbon may include at least one selected from the group consisting of furnace black, acetylene black, Ketjen black, graphene, and combinations thereof.

The metal may include at least one selected from the group consisting of gold (Au), platinum (Pt), palladium (Pd), silicon (Si), silver (Ag), aluminum (Al), bismuth (Bi), tin (Sn), zinc (Zn), and combinations thereof.

The solid electrolyte layer 30 may further include a solid electrolyte having a different composition together with the solid electrolyte described above. For example, the solid electrolyte layer 30 may further include an oxide-based solid electrolyte, a sulfide-based solid electrolyte, a polymer electrolyte, and the like.

The oxide-based solid electrolyte and the sulfide-based solid electrolyte are as described above.

The polymer electrolyte may include a gel polymer electrolyte, a solid polymer electrolyte, and the like.

The cathode layer 40 may include a cathode active material, a solid electrolyte, a conductive material, a binder, and the like.

The cathode active material may reversibly intercalate and disintercalate lithium ions. The cathode active material may be an oxide active material or a sulfide active material.

The oxide active material may include a rock salt layer-type active material such as $LiCoO_2$, $LiMnO_2$, $LiNiO_2$, $LiVO_2$, $Li_{1+x}Ni_{1/3}Co_{1/3}Mn_{1/3}O_2$, or the like, a spinel-type active material such as $LiMn_2O_4$, $Li(Ni_{0.5}Mn_{1.5})O_4$, or the like, a reverse spinel-type active material such as $LiNiVO_4$, $LiCoVO_4$, or the like, an olivine-type active material such as $LiFePO_4$, $LiMnPO_4$, $LiCoPO_4$, $LiNiPO_4$, or the like, a silicon-containing active material such as $Li_2FeSiO_4$, $Li_2MnSiO_4$, or the like, a rock salt layer-type active material in which a part of the transition metal is substituted with a dissimilar metal, such as $LiNi_{0.8}Co_{(0.2-x)}Al_xO_2$ ($0<x<0.2$), a spinel-type active material in which a part of the transition metal is substituted with a dissimilar metal, such as $Li_{1+x}Mn_{2-x-y}M_yO_4$ (M is at least one of Al, Mg, Co, Fe, Ni, and Zn, and $0<x+y<2$), or a lithium titanate such as $Li_4Ti_5O_{12}$ or the like.

The sulfide active material may include copper chevrel, iron sulfide, cobalt sulfide, nickel sulfide, and the like.

The cathode layer 40 may further include a solid electrolyte having a different composition together with the solid electrolyte described above. For example, the cathode layer 40 may further include an oxide-based solid electrolyte or a sulfide-based solid electrolyte. The oxide-based solid electrolyte and the sulfide-based solid electrolyte are as described above.

The conductive material may include carbon black, conductive graphite, ethylene black, graphene, and the like.

The binder may include butadiene rubber (BR), nitrile butadiene rubber (NBR), hydrogenated nitrile butadiene rubber (HNBR), polyvinylidene difluoride (PVDF), polytetrafluoroethylene (PTFE), carboxymethyl cellulose (CMC), and the like.

The cathode current collector 50 may be a plate-shaped substrate having electrical conductivity. The cathode current collector 50 may include an aluminum foil.

Hereinafter, a method for preparing a solid electrolyte according to embodiments of the present disclosure will be described in detail.

The preparation method may include steps of preparing a starting material including a compound containing lithium, a compound containing phosphorus (P), a compound containing the element M, and two or more compounds containing different halogen elements, preparing an intermediate material by pulverizing the starting material, and heat-treating the intermediate material.

The compound containing lithium may include a sulfide containing lithium. For example, the compound containing lithium may include lithium sulfide ($Li_2S$).

The compound containing phosphorus (P) may include a sulfide containing phosphorus. For example, it may include phosphorus pentasulfide ($P_2S_5$).

The compound containing the element M may include a sulfide containing the element M. For example, the compound including the element M may include $GeS_2$, $SiS_2$, $SnS_2$, and the like.

The compounds containing halogen elements may include lithium salts containing the halogen elements. For example, the compounds containing the halogen elements may include LiF, LiCl, LiBr, LiI, and the like.

After weighing respective compounds according to the desired composition of the solid electrolyte, the weighed compounds are mixed to prepare a starting material, and the starting material is pulverized at about 800 rpm to 1,000 rpm so that an intermediate material may be obtained. When the starting material is pulverized at the above speed, a force of about 25 G to 50 G may be applied to the starting material. If a pulverization speed of the starting material is less than 800 rpm, the element M may not substitute for the phosphorus element, and the substituted solid electrolyte may not be mixed.

The pulverization time for the starting material is not particularly limited, and it may be, for example, about 1 hour to 36 hours.

The intermediate material may be heat treated at about 400°C to 600°C for about 25 minutes to 36 hours to obtain a solid electrolyte which contains a first compound, a second compound, and a third compound, and is crystalline. When the temperature and time of the heat treatment are less than the above numerical ranges, the crystallinity of the solid electrolyte is not sufficient, and thus the lithium ion conductivity may decrease. When the temperature and time of the heat treatment exceed the above numerical ranges, the solid electrolyte may deteriorate.

Heat treatment for the intermediate material may be performed in an inert atmosphere. The inert atmosphere is an atmosphere containing an inert gas. The inert gas is, for example, nitrogen, argon, or the like, but is not necessarily limited thereto, and any one used as an inert gas in the art is possible.

Hereinafter, other forms of embodiments of the present disclosure will be described in more detail through examples. The following examples are merely examples to help understanding of embodiments of the present disclosure, and the scope of the present disclosure is not limited thereto.

Example 1

In order to obtain a solid electrolyte in which $Li_{5.4}PS_{4.4}Cl_{0.8}Br_{0.8}$, $Li_{5.4}P_{0.8}Sn_{0.1}S_{4.1}Cl_{0.8}Br_{0.8}$, and $Li_4SnS_4$ were complexed, a starting material was prepared by combining $Li_2S$, $P_2S_5$, $SnS_2$, LiCl, and LiBr at a stoichiometric ratio according to the corresponding composition.

The starting material was pulverized at about 800 rpm in a planetary ball mill of an argon atmosphere containing zirconia balls for about 24 hours to obtain an intermediate material.

The intermediate material was heat treated at about 450°C for about 25 minutes to obtain a solid electrolyte according to Example 1.

Example 2

In order to obtain a solid electrolyte in which $Li_{5.4}PS_{4.4}Cl_{0.8}Br_{0.8}$, $Li_{5.4}P_{0.85}Sn_{0.075}S_{4.175}Cl_{0.8}Br_{0.8}$, and $Li_4SnS_4$ were complexed, a starting material was prepared by combining $Li_2S$, $P_2S_5$, $SnS_2$, LiCl, and LiBr at a stoichiometric ratio according to the corresponding composition.

Except for this, a solid electrolyte according to Example 2 was prepared in the same manner as in Example 1.

Example 3

In order to obtain a solid electrolyte in which $Li_{5.4}PS_{4.4}Cl_{0.8}Br_{0.8}$, $Li_{5.4}P_{0.88}Sn_{0.06}S_{4.22}Cl_{0.8}Br_{0.8}$, and $Li_4SnS_4$ were complexed, a starting material was prepared by combining $Li_2S$, $P_2S_5$, $SnS_2$, LiCl, and LiBr at a stoichiometric ratio according to the corresponding composition.

Except for this, a solid electrolyte according to Example 2 was prepared in the same manner as in Example 1.

Example 4

In order to obtain a solid electrolyte in which $Li_{5.4}PS_{4.4}Cl_{0.8}Br_{0.8}$, $Li_{5.4}P_{0.9}Sn_{0.05}S_{4.25}Cl_{0.8}Br_{0.8}$, and $Li_4SnS_4$ were complexed, a starting material was prepared by combining $Li_2S$, $P_2S_5$, $SnS_2$, LiCl, and LiBr at a stoichiometric ratio according to the corresponding composition.

Except for this, a solid electrolyte according to Example 2 was prepared in the same manner as in Example 1.

Comparative Example 1

In order to obtain a solid electrolyte represented by $Li_6PS_5Cl$, a starting material was prepared by combining $Li_2S$, $P_2S_5$, and LiCl at a stoichiometric ratio according to the corresponding composition.

Except for this, a solid electrolyte according to Comparative Example 1 was prepared in the same manner as in Example 1.

Comparative Example 2

In order to obtain a solid electrolyte represented by $Li_{5.4}PS_{4.4}Cl_{0.8}Br_{0.8}$, a starting material was prepared by combining $Li_2S$, $P_2S_5$, LiCl, and LiBr at a stoichiometric ratio according to the corresponding composition.

Except for this, a solid electrolyte according to Comparative Example 2 was prepared in the same manner as in Example 1.

Comparative Example 3a

A starting material was prepared by mixing $Li_{5.4}PS_{4.4}Cl_{0.8}Br_{0.8}$ and $Li_4SnS_4$ at a molar ratio of 80:20.

Except for this, a solid electrolyte according to Comparative Example 3a was prepared in the same manner as in Example 1.

Comparative Example 3b

A starting material was prepared by mixing $Li_{5.4}PS_{4.4}Cl_{0.8}Br_{0.8}$ and $Li_4SnS_4$ at a molar ratio of 94:6.

Except for this, a solid electrolyte according to Comparative Example 3b was prepared in the same manner as in Example 1.

Comparative Example 3c

A starting material was prepared by mixing $Li_{5.4}PS_{4.4}Cl_{0.8}Br_{0.8}$ and $Li_4SnS_4$ at a molar ratio of 98:2.

Except for this, a solid electrolyte according to Comparative Example 3c was prepared in the same manner as in Example 1.

Comparative Example 4a

A solid electrolyte according to Comparative Example 4a was prepared in the same manner as in Example 4 except that the starting material was pulverized at 400 rpm.

Comparative Example 4b

A solid electrolyte according to Comparative Example 4b was prepared in the same manner as in Example 4 except that the starting material was pulverized at 600 rpm.

FIG. 2A shows X-ray diffraction analysis results of the solid electrolytes of Examples 1 to 4 and Comparative Example 2. In the solid electrolytes of Examples 1 to 4, both of a peak (argyrodite) due to the cubic argyrodite-type crystal structure and a peak ($Li_4SnS_4$) due to the orthorhombic crystal structure are found. The solid electrolyte of Comparative Example 2 does not show a peak due to the orthorhombic crystal structure.

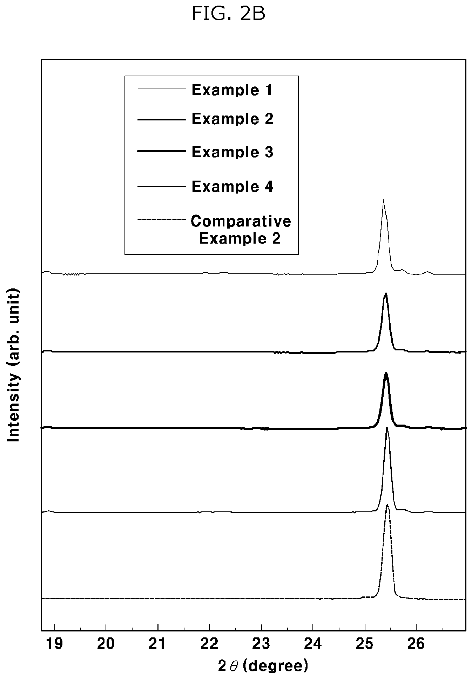

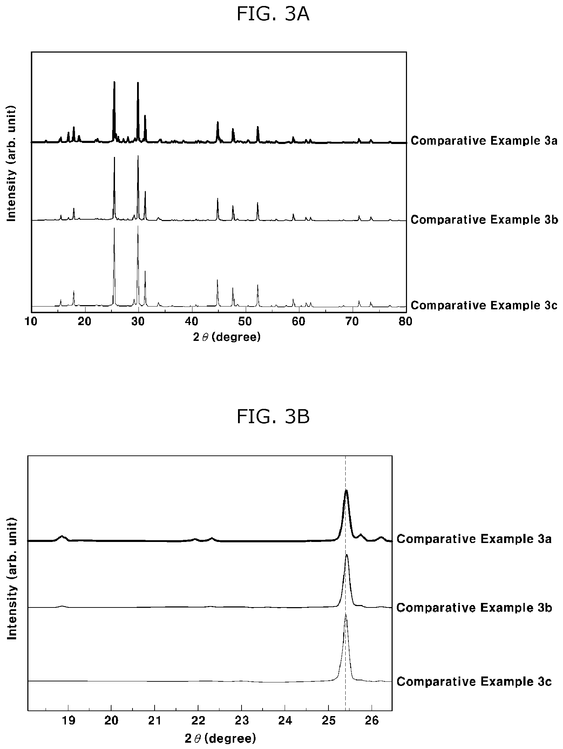

FIG. 2B shows an enlarged view of partial regions of FIG. 2A. In the solid electrolytes of Examples 1 to 4, the $2\theta$ value of the peak of the (220) plane of the cubic argyrodite-type crystal structure shifts to lower angles as it goes from Example 4 with a small number of moles of the tin element to Example 1 with a large number of moles of the tin element. Specifically, the $2\theta$ value of the peak of the (220) plane shifts to lower angles by greater than 0° and 0.1° or less. FIG. 3A shows X-ray diffraction analysis results of the solid electrolytes of Comparative Examples 3a to 3c. FIG. 3B shows an enlarged view of partial regions of FIG. 3A. Referring to FIGS. 3A and 3B, the peak of the (220) plane does not shift in Comparative Examples 3a to 3c.

Examples 1 to 4 are solid electrolytes prepared by combining $Li_2S$, $P_2S_5$, $SnS_2$, LiCl, and LiBr, and Comparative Examples 3a to 3c are solid electrolytes prepared by mixing $Li_{5.4}PS_{4.4}Cl_{0.8}Br_{0.8}$ and $Li_4SnS_4$. It is not possible to obtain a solid electrolyte in which the first compound, the second compound, and the third compound are complexed as in embodiments of the present disclosure only by combining two types of solid electrolytes that have already been synthesized as in Comparative Examples 3a to 3c, and this may be seen from whether the peaks of the (220) planes of FIGS. 2 and 3 are shifted or not.

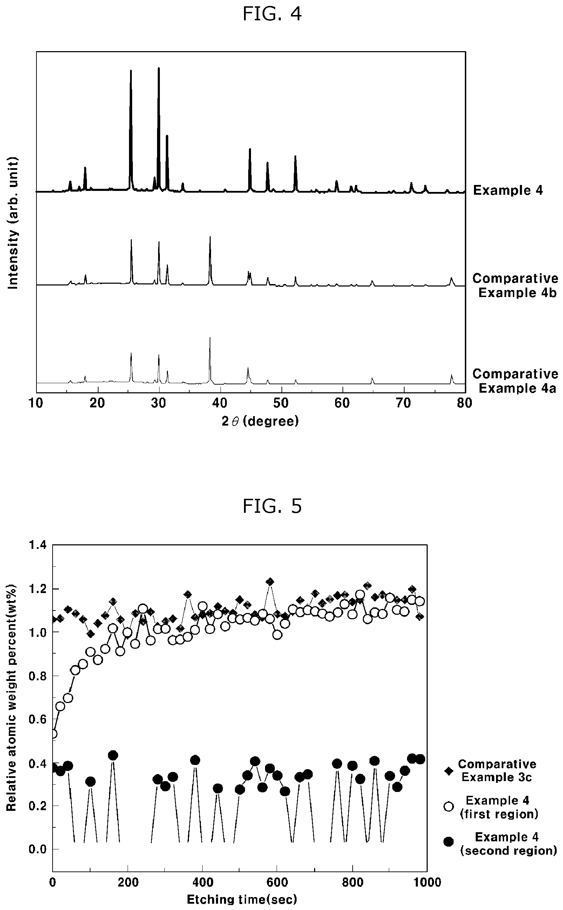

FIG. 4 shows X-ray diffraction analysis results of the solid electrolytes of Example 4, Comparative Example 4a, and Comparative Example 4b. The solid electrolyte of Example 4 has a ratio ($I_{(38.5)}/I_{(30.0)}$) of the peak intensity at $2\theta=38.5\pm0.5°$ to the peak intensity at $2\theta=30\pm0.5°$ of about $0.01$ or less. The solid electrolytes of Comparative Examples 4a and 4b have a ratio ($I_{(38.5)}/I_{(30.0)}$) of the peak intensity at $2\theta=38.5\pm0.5°$ to the peak intensity at $2\theta=30\pm0.5°$ of about 1 or more. The peak at $2\theta=38.5\pm0.5°$ found in the solid electrolytes of Comparative Examples 4a and 4b is due to $Li_nSn_m$. $Li_nSn_m$ is formed when a tin element replaces a phosphorus element and reacts with lithium without entering the crystal structure of the solid electrolyte. Even if $Li_2S$, $P_2S_5$, $SnS_2$, LiCl, and LiBr are used in combination as a starting material as in embodiments of the present disclosure, the phosphorus element cannot be replaced with the element M when the starting material is pulverized at a speed of less than 800 rpm as in Comparative Example 4a and Comparative Example 4b.

Further, the solid electrolyte according to embodiments of the present disclosure may have a ratio $(I_{(25)}/I_{(17)})$ of the peak intensity at $2\theta=25\pm0.5°$ to the peak intensity at $2\theta=17\pm0.5°$ in the X-ray diffraction (XRD) pattern of about 1 to 10. The peak at $2\theta=25\pm0.5°$ is a peak due to the argyrodite-type crystal structure, and the peak at $2\theta=17\pm0.5°$ is a peak due to $Li_4SnS_4$.

FIG. 5 shows the contents of the tin element of the solid electrolytes of Example 4 and Comparative Example 3c by X-ray photoelectron spectroscopy (XPS). The results of Example 4 include a first region and a second region in which the measured tin element contents are different from each other.

Since the tin element content of the first region is similar to Comparative Example 3c, the first region corresponds to $Li_4SnS_4$. The second region having a low tin element content corresponds to $Li_{5.4}P_{0.9}Sn_{0.05}S_{4.25}Cl_{0.8}Br_{0.8}$. It can be seen through this that the solid electrolyte according to embodiments of the present disclosure is one in which the first compound, the second compound, and the third compound are complexed.

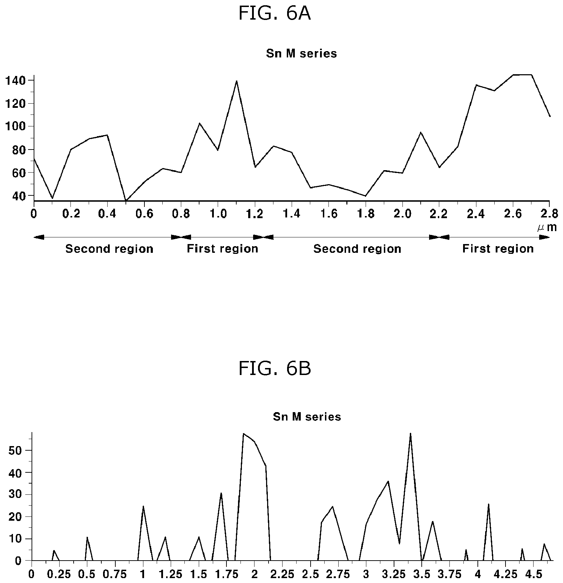

Referring to FIG. 6A, it can be seen that a region having a small content of the tin element and a region having a large content of the tin element are distinguished. The region having a small content of the tin element is the second region, and the region having a large content of the tin element is the first region. On the other hand, referring to FIG. 6B, since the solid electrolyte of Comparative Example 3c is a mixture of two types of solid electrolytes that have already been synthesized, these are coarsely distributed so that a portion where the tin element is present and a portion where the tin element is not present appear randomly.

Moisture stability of the solid electrolytes according to Example 4, Comparative Example 1, Comparative Example 2, and Comparative Example 3c was evaluated.

A powder was prepared by pulverizing each solid electrolyte with an agate mortar. 150 mg of the powder was pressed at a pressure of about 4 ton/cm$^2$ for about 10 seconds to 2 minutes to prepare a pellet specimen having a thickness of about 0.500 mm to 0.900 mm and a diameter of about 13 mm. A symmetric cell was prepared by disposing stainless steel (SuS) and lithium (Li) electrodes having a thickness of about 50 $\mu$m to 200 $\mu$m and a diameter of about 13 mm on both surfaces of the specimen, respectively. The preparation of the symmetric cell was carried out in an argon atmosphere glove box.

Impedance of the symmetric cell was measured by a 2-probe method using an impedance analyzer (Material Mates 7260 impedance analyzer). The frequency range was 0.1 Hz to 1 MHz, and the amplitude voltage was 10 mV. Impedance was measured under conditions of an argon atmosphere and about 25°C. The resistance value was obtained from the arc of the Nyquist plot for the impedance measurement result, and the lithium ion conductivity was calculated in consideration of the area and thickness of the specimen. The result was set as the initial lithium ion conductivity of the solid electrolyte in Table 1 below.

Each powder pulverized with the agate mortar was stored for 3 days in an air atmosphere dry room having a dew point of about -60°C or less, and then taken out to measure the lithium ion conductivity in the same manner as above. The result was set as the lithium ion conductivity of the solid electrolyte after 3 days in Table 1 below.

The lithium ion conductivity retention rate of each solid electrolyte was calculated by Mathematical Equation 1 below and shown in Table 1.

## Mathematical Equation 1

$$\text{Lithium ion conductivity retention rate [\%]} = [\text{Lithium ion conductivity of solid electrolyte after 3 days / Initial lithium ion conductivity of solid electrolyte}] \times 100$$

Table 1

| Classification | Lithium ion conductivity @25°C [S/cm] | | Lithium ion conductivity retention rate [%] |
|---|---|---|---|
| | Initial | After 3 days | |
| Example 4 | $2.16\times10^{-3}$ | $2.43\times10^{-3}$ | More than 100 |

(continued)

| Classification | Lithium ion conductivity @25°C [S/cm] | | Lithium ion conductivity retention rate [%] |
|---|---|---|---|
| | Initial | After 3 days | |
| Comparative Example 1 | $1.95 \times 10^{-3}$ | $1.46 \times 10^{-3}$ | 74.9 |
| Comparative Example 2 | $4.76 \times 10^{-3}$ | $2.85 \times 10^{-3}$ | 59.8 |
| Comparative Example 3c | $3.67 \times 10^{-3}$ | $2.32 \times 10^{-3}$ | 63.2 |

The solid electrolyte according to Example 4 has a lithium ion conductivity retention rate of more than 100%, whereas the solid electrolytes of Comparative Example 1, Comparative Example 2, and Comparative Example 3c have lithium ion conductivity retention rates of less than 80%.

It can be seen that the solid electrolyte containing the first compound, the second compound, and the third compound according to embodiments of the present disclosure has excellent moisture stability compared to Comparative Examples.

The characteristics of all-solid-state batteries including the solid electrolytes according to Example 4, Comparative Example 1, Comparative Example 2, and Comparative Example 3c were evaluated.

Cathode mixture

A cathode mixture was prepared by mixing a cathode active material, solid electrolytes, and a conductive material at a weight ratio of 80 to 85:20 to 15:0.5. The cathode active material is $LiNi_{0.8}Co_{0.15}Al_{0.05}O_2$ (NCA), the solid electrolytes are the solid electrolytes according to Example 4, Comparative Example 1, Comparative Example 2, and Comparative Example 3c, respectively, and the conductive material is CNF.

Solid electrolyte powders

Solid electrolyte powders were prepared by pulverizing the solid electrolytes according to Example 4, Comparative Example 1, Comparative Example 2, and Comparative Example 3c with an agate mortar.

Anode layer

A metal lithium foil having a thickness of about 30 $\mu$m was prepared as an anode layer.

Manufacture of all-solid-state batteries

After sequentially stacking the anode layer, about 150 mg of the solid electrolyte powders, and about 15 to 30 mg of the cathode mixture on stainless steel (SUS) as the anode current collector, stainless steel (SUS) as the cathode current collector was disposed on the cathode mixture to prepare laminates. The laminates were pressed at a pressure of about 4 ton/cm$^2$ for about 1 minute to 2 minutes. All-solid-state batteries were manufactured by applying pressure to the pressed laminates at a torque of about 50 N·m using a torque wrench.

Each all-solid-state battery was put in a chamber of about 45°C. Each all-solid-state battery was charged with a constant current of 0.1C and a constant voltage of 4.25 V until a current value of 0.05C was reached. Subsequently, the battery was discharged at a constant current of 0.2C until the battery voltage reached 2.5 V. Thereafter, a change in implemented capacity according to an increase in the discharge rate was observed by repeating charging after each discharging under the same conditions and performing discharging three times at constant currents of 0.33C, 0.5C, and 1C, respectively. The results are shown in Table 2 below.

**Table 2**

| Classification | Charge 0.1C CC/CV, discharge 0.2C | | | 0.33C | 0.5C | 1C |
|---|---|---|---|---|---|---|
| | Charging capacity [mAh/g] | Discharge capacity [mAh/g] | Efficiency [%] | Discharge capacity [mAh/g] | Discharge capacity [mAh/g] | Discharge capacity [mAh/g] |
| Example 4 | 237.1 | 207.0 | 87.3 | 202.3 | 193.1 | 179.5 |

(continued)

| Classification | Charge 0.1C CC/CV, discharge 0.2C | | | 0.33C | 0.5C | 1C |
|---|---|---|---|---|---|---|
| | Charging capacity [mAh/g] | Discharge capacity [mAh/g] | Efficiency [%] | Discharge capacity [mAh/g] | Discharge capacity [mAh/g] | Discharge capacity [mAh/g] |
| Comparative Example 1 | 229.2 | 194.8 | 85.0 | 185.5 | 172.7 | 161.2 |
| Comparative Example 2 | 233.1 | 202.5 | 86.9 | 196.8 | 188.5 | 165.1 |
| Comparative Example 3c | 230.8 | 199.6 | 86.5 | 192.4 | 181.7 | 167.3 |

The all-solid-state battery including the solid electrolyte of Example 4 was superior in all of charging capacity, discharge capacity, and efficiency to those of Comparative Examples.

The solid electrolytes according to Example 4, Comparative Example 1, Comparative Example 2, and Comparative Example 3c were stored in an air atmosphere dry room of about -60°C or less for 3 days, and then taken out to manufacture all-solid-state batteries in the same manner as above, and the characteristics of each all-solid-state battery were evaluated in the same manner as above. The results are shown in Table 3 below.

**Table 3**

| Classification | Charge 0.1C CC/CV, discharge 0.2C | | | 0.33C | 0.5C | 1C |
|---|---|---|---|---|---|---|
| | Charging capacity [mAh/g] | Discharge capacity [mAh/g] | Efficiency [%] | Discharge capacity [mAh/g] | Discharge capacity [mAh/g] | Discharge capacity [mAh/g] |
| Example 4 | 231.3 | 202.0 | 87.3 | 197.9 | 188.7 | 173.4 |
| Comparative Example 1 | 218.1 | 185.4 | 85.0 | 175.5 | 163.1 | 143.9 |
| Comparative Example 2 | 231.5 | 190.8 | 82.4 | 181.0 | 169.3 | 154.5 |
| Comparative Example 3c | 209.1 | 170.0 | 81.3 | 160.6 | 146.5 | 108.4 |

The all-solid-state battery including the solid electrolyte of Example 4 is superior in all of charging capacity, discharge capacity, and efficiency to those of Comparative Examples. In addition, the all-solid-state battery including the solid electrolyte of Example 4 shows a remarkably lower drop in characteristics than those of Comparative Examples by comparing with the results of Table 2.

As the examples of embodiments of the present disclosure have been described in detail above, the proper scope of the present disclosure is not limited to the above-described examples, and various modifications and improved forms by those skilled in the art using the basic concepts of the present disclosure defined in the following claims are also included in the proper scope of the present disclosure.

## Claims

1. A solid electrolyte comprising:

    a first compound represented by a first chemical formula

    $$Li_{7-a}PS_{6-a}(X1_{1-b}X2_b)_a,$$

    wherein X1 and X2 are the same or different and are each and element selected from the group consisting of F, Cl, Br, and I, and wherein 0<a≤2 and 0<b<1; and

a second compound represented by a second chemical formula $Li_{7-c}P_{1-2d}M_dS_{6-c-3d}(X1_{1-e}X2_e)_c$, wherein M comprises an element selected from the group consisting of Ge, Si, and Sn, and combination thereof, and wherein 0<c≤2, 0<d<0.5, and 0<e<1.

2. The solid electrolyte of claim 1, wherein the solid electrolyte further comprises a third compound represented by a third chemical formula $Li_fM_gS_h$, wherein 0<f≤10, 0<g≤5, and 0<h≤10.

3. The solid electrolyte of claim 1 or 2, wherein an X-ray diffraction pattern of the solid electrolyte comprises:

a peak due to a cubic argyrodite-type crystal structure; and
a peak due to an orthorhombic crystal structure.

4. The solid electrolyte of any one of claims 1 to 3, wherein the solid electrolyte has properties such that as d in the second chemical formula increases, 2θ value of a peak of a (220) plane in an X-ray diffraction pattern of the solid electrolyte shifts to lower angles by greater than 0° and 0.1° or less, wherein the peak of the (220) plane is due to a cubic argyrodite-type crystal structure.

5. The solid electrolyte of any one of claims 1 to 4, wherein the solid electrolyte has a ratio ($I_{(38.5)}/I_{(30.0)}$) of peak intensity at 2θ=38.5±0.5° to peak intensity at 2θ=30±0.5° in an X-ray diffraction pattern of 0.01 or less.

6. The solid electrolyte of any one of claims 1 to 5, wherein the solid electrolyte has a ratio ($I_{(25)}/I_{(17)}$) of peak intensity at 2θ=25±0.5° to peak intensity at 2θ=17±0.5° in an X-ray diffraction pattern of 1 to 10.

7. The solid electrolyte of any one of claims 1 to 6, wherein, when the solid electrolyte is analyzed by X-ray photoelectron spectroscopy, a first region and a second region with different contents of M appear, in which the content of M in the first region is 0.9 at% to 1.2 at% and the content of M in the second region is 0.2 at% to 0.5 at%.

8. The solid electrolyte of any one of claims 1 to 7, wherein the solid electrolyte has a lithium ion conductivity retention rate of 80% or more after 3 days under dry conditions in an air atmosphere having a dew point of -70°C or less.

9. A method for preparing a solid electrolyte comprising:

preparing a starting material comprising a compound comprising lithium, a compound comprising phosphorus, a compound comprising an element M, and two or more compounds comprising different halogen elements;
preparing an intermediate material by pulverizing the starting material; and
heat treating the intermediate material;
wherein the solid electrolyte comprises:

a first compound represented by a first chemical formula $Li_{7-a}PS_{6-a}(X1_{1-b}X2_b)_a$, wherein X1 and X2 are the same or different and each comprise an element selected from the group consisting of F, Cl, Br, or I, and wherein 0<a≤2 and 0<b<1; and
a second compound represented by a second chemical formula $Li_{7-c}P_{1-2d}M_dS_{6-c-3d}(X1_{1-e}X2_e)_c$, wherein M comprises an element selected from the group consisting of Ge, Si, and Sn, and combinations thereof, and wherein 0<c≤2, 0<d<0.5, and 0<e<1.

10. The method of claim 9, wherein the solid electrolyte further comprises a third compound represented by a third chemical formula $Li_fM_gS_h$, wherein 0<f≤10, 0<g≤5, and 0<h≤10.

11. The method of claim 9 or 10, wherein pulverizing the starting material comprises pulverizing the starting material by applying a force of 25 G to 50 G and a rotate speed at 800 rpm to 1,000 rpm to the starting material.

12. The method of any one of claims 9 to 11, wherein heat treating the intermediate material comprising heat treating the intermediate material at 400°C to 600°C for 25 minutes to 36 hours.

13. The method of any one of claims 9 to 12, wherein an X-ray diffraction pattern of the solid electrolyte comprises:

a peak due to a cubic argyrodite-type crystal structure; and

a peak due to an orthorhombic crystal structure.

14. The method of any one of claims 9 to 13, wherein the solid electrolyte has properties such that as d in the second chemical formula increases, $2\theta$ value of a peak of a (220) plane in an X-ray diffraction pattern of the solid electrolyte shifts to lower angles by greater than 0° and 0.1° or less, wherein the peak of the (220) plane is due to a cubic argyrodite-type crystal structure.

15. The method of any one of claims 9 to 14, wherein the solid electrolyte has a ratio ($I_{(38.5)}/I_{(30.0)}$) of peak intensity at $2\theta=38.5\pm0.5°$ to peak intensity at $2\theta=30\pm0.5°$ in an X-ray diffraction pattern of 0.01 or less,

wherein the solid electrolyte has a ratio ($I_{(25)}/I_{(17)}$) of peak intensity at $2\theta=25\pm0.5°$ to peak intensity at $2\theta=17\pm0.5°$ in an X-ray diffraction pattern of 1 to 10, and

wherein, when the solid electrolyte is analyzed by X-ray photoelectron spectroscopy, a first region and a second region with different contents of the element M appear, in which the content of the element M in the first region is 0.9 at% to 1.2 at% and the content of the element M in the second region is 0.2 at% to 0.5 at%.

## FIG. 1

## FIG. 2A

EP 4 376 145 A2

## FIG. 2B

## FIG. 3A

## FIG. 3B

FIG. 4

FIG. 5

FIG. 6A

**Sn M series**

FIG. 6B

**Sn M series**